# EUROPEAN PATENT SPECIFICATION

(11) **EP 2 652 028 B1**
(45) Date of publication and mention of the grant of the patent: **06.07.2016**
(21) Application number: 11797308.1
(22) Date of filing: 12.12.2011
(51) Int. Cl.: C08K 5/00, C08L 101/02

(54) **POLYMER COMPOSITION CONTAINING A POLYMER, WHICH POLYMER CONTAINS MONOMER UNITS OF A DIMERISED FATTY ACID**
POLYMERZUSAMMENSETZUNG MIT EINEM POLYMER, WOBEI DAS POLYMER MONOMEREINHEITEN AUS DIMERISIERTER FETTSÄURE ENTHÄLT
COMPOSITION DE POLYMÈRE CONTENANT UN POLYMÈRE, LEDIT POLYMÈRE CONTENANT DES UNITÉS MONOMÈRES D'UN ACIDE GRAS DIMÉRISÉ

(30) Priority: 16.12.2010 EP 10195293
(43) Date of publication of application: 23.10.2013
(73) Proprietor: DSM IP Assets B.V., 6411 TE Heerlen (NL)
(72) Inventor: GIJSMAN, Pieter, NL-6191 NM Beek (NL); HEUVEL, VAN DEN, Paul Willem Jan, NL-6225 KK Maastricht (NL)
(74) Representative: Dorrestijn, Antoon
(86) International application number: PCT/EP2011/072444
(87) International publication number: WO 2012/080166

(56) References cited:
- EP-A1- 1 884 356
- WO-A1-03/010370
- WO-A1-2009/112369
- WO-A1-2010/122002
- WO-A2-95/24439
- WO-A2-2007/036929

## Description

The invention relates to a polymer composition containing a thermoplastic elastomer containing hard segments, which polymer contains residues of a dimerised fatty acid and/or a derivative thereof, characterized in that the composition contains a trivalent phosphorus containing secondary anti-oxidant or a thioether secondary anti-oxidant.

The use in polymers, of residues that may be obtained from renewable sources is increasingly important. The use of the monomer units obtainable from renewable resources that need not be produced from fossil carbon is a desirable way of reducing the greenhouse gasses released by the production of polymers.

A good example is the use of a dimerised fatty acid residue in polymers. Dimerised fatty acid residues are used to impart flexibility to a polymer.

From US 2006/0235190 a semi crystalline, melt processable, partially aromatic copolyamide is known containing a residue of a dimerised fatty acid.

The dimerised fatty acid contains two carboxylic groups that may be used for copolymerizing the fatty acid. In order to copolymerize the dimerised fatty acid into the polyamide aliphatic diamines, for example hexamethylene diamine, are used.

The same principle is for example known for thermoplastic elastomers containing polyester hard segments. In that case the dimerised fatty acid may be used without the modification of the two carboxylic acid groups.

Parts produced of the polymer composition according to the invention have to be able to withstand high temperatures for a certain period of time, for example parts that get exposed to the sun or car parts during the painting process of the car or because the car parts are used under the hood. For that reason it is important that the polymer composition shows a sufficient thermal stability.

It is well known to improve the thermal stability of polymer compositions by the addition of thermal stabilizers. So called primary anti-oxidants of which phenolic type anti-oxidants are a good example, have proven to be most effective for this purpose. See for example Plastics Additives Handbook, Hansers Publishers, Munich, ISBN 978-3-446-40801-2 (2009), p. 54, Fig. 1.27 and Handbook of Polymer Degradation, Marcel Dekker, New York, ISBN 0-8247-0324-3 (2000), p.86, Fig. 1.

Object of the invention is to provide a polymer composition containing a polymer, which polymer contains residues of a dimerised fatty acid and/or a derivative thereof, which polymer composition has an increased thermal stability.

Surprisingly this object is obtained by providing a polymer compostion according to claim 1 that contains a secondary anti-oxidant which is a trivalent phosphorus containing anti-oxidant or a thio-ether containing anti-oxidant.

The polymer composition according to the inventions shows a very good thermal stability, which is considerably higher the composition containing an other heat stabilizer, for example a primary anti-oxidant. This is contrary to what has been known about the stabilization of polymer compositions until now.

It is especially surprisingly that the thermal stability of the polymer composition is in an absolute sense at a very high level. The thermal stability of the composition according to the invention is considerably higher than the thermal stability of a composition containing a similar polymer, however without the residues of a dimerised fatty acid and/or a derivative thereof, the composition nonetheless containing optimal types and amounts of thermal stabilizers. This is especially true if the polymer is a thermoplastic elastomer.

The dimerised fatty acids may be obtained from monomeric unsaturated fatty acids by an oligomerisation reaction. The oligomer mixture is further processed, for example by distillation, to yield a mixture having a high content of the dimerised fatty acid. The double bonds in the dimerised fatty acid may be saturated by catalytic hydrogenation. The term dimerised fatty acid as it is used here relates to both types of these dimerised fatty acids, the saturated and the unsaturated. It is preferred that the dimerised fatty acid is saturated.

It is also possible to produce derivatives of the dimerised fatty acid. For example a dimerised fatty diol may be obtained as a derivative of the dimerised fatty acid by hydrogenation of the carboxylic acid groups of the dimerised fatty acid, or of an ester group made thereof. Further derivatives may be obtained by converting the carboxylic acid groups, or the ester groups made thereof, into an amide group, a nitril group, an amine group or an isocyanate group.

The dimerised fatty acids may contain from 32 up to 44 carbon atoms. Preferably the dimerised fatty acid contains 36 carbon atoms.

Further details relating to the structure and the properties of the dimerised fatty acids may be found in the corresponding leaflet "Pripol C36-Dimer acid" of the company UNICHEMA (Emmerich, Germany) or in the brochure of the Company COGNIS (Düsseldorf, Germany) "Empol Dimer and Poly-basic Acids; Technical Bulletin 114C (1997)".

In the production of the polymer containing the residue of the dimerised fatty acid and/or a derivative thereof the dimerised fatty acid and its derivative may be used as a monomer or as a pre-cursor oligomer or polymer. In one example the pre-cursor oligomer or polymer is a polyester, formed of dimerised fatty acid and/or dimerised fatty diol with any combination of diols or dicarboxylic acids. In another example the pre-cursor oligomer or polymer is a polyamide, formed of dimerised fatty acid and/or dimerised fatty diamines with any combination of diamines or dicarboxylic acids forming polyamides.

In a preferred embodiment the pre-cursor is a precursor oligomer or polymer of a dimerised fatty acid and a dimerised fatty amine. Depending on the ratio of dimerised fatty acids and dimerised fatty amines as well as the degree of polymerization of the fatty acid and the fatty amine the endgoups of the precursor are tuned to be acid groups or amine groups. Depending on the further monomers and/or pre-polymers that are used to produce the final polymer, it might be desirable to have acid endgroups or amine endgroups.

The precursor oligomer or polymer preferably has a number average molecular weight (Mn) of at least 600 kg/kmol, more preferably at least 1000 kg/kmol, even more preferably at least 2000 kg/kmol. The Mn is preferably at most 5000 kg/kmol, more preferably at most 2500 kg.kmol.

Examples of polymers containing the residue of the dimerised fatty acid and/or derivatives thereof are thermoplastic elastomers having hard segments of polyester, nylon and polycarbonate, the soft segments containing the residue of the dimerised fatty acid and/or a derivative.

The polymer may contain between 1 and 70 wt. % of the residue of the dimerised fatty acid and/or a derivative thereof. Preferably the polymer contains between 5 and 50, more preferably between 10 and 30 wt. % of the residue of the dimerised fatty acid and/or a derivative thereof.

The thermoplastic elastomer is a polymer containing hard segments of polyester and the soft segments containing the residue of a dimerised fatty acid and/or a derivative thereof.

Such a thermoplastic elastomer contains hard segments that are built up from repeating units derived from at least one alkylene diol and at least one aromatic dicarboxylic acid or an ester thereof. The linear or cycloaliphatic alkylene diol contains generally 2-8 C-atoms, preferably 2-4 C-atoms. Examples thereof include ethylene glycol, propylene diol and butylene diol. Preferably propylene diol or butylene diol are used, more preferably 1,4-butylene diol. Examples of suitable aromatic dicarboxylic acids include terephthalic acid, 2,6-naphthalenedicarboxylic acid, 4,4'-biphenyldicarboxylic acid or combinations of these. The advantage thereof is that the resulting polyester is generally semi-crystalline with a melting point of above 150, preferably above 175, and more preferably of above 190°C. The hard segments may optionally further contain a minor amount of units derived from other dicarboxylic acids, for example isophthalic acid, which generally lowers the melting point of the polyester. The amount of other dicarboxylic acids is preferably limited to not more than 10, more preferably not more than 5 mol%, based on the total amount of dicarboxylic acids, so as to ensure that, among other things, the crystallization behaviour of the copolyether ester is not adversely affected. The hard segment is preferably built up from ethylene terephthalate, propylene terephthalate, and in particular from butylene terephthalate as repeating units. Advantages of these readily available units include favourable crystallisation behaviour and a high melting point, resulting in a thermoplastic elastomer according to the invention with good processing properties, excellent thermal and chemical resistance and good puncture resistance.

Secondary anti-oxidants may act by reducing hydro peroxides. The secondary anti-oxidants are trivalent phosphorous containing anti-oxidants and thio-ether containing anti-oxidants. Some stabilizers both act as secondary and primary stabilizers. For the purpose of this invention they will be regarded as secondary anti-oxidants.
Examples of trivalent phosphorous containing compounds are:
Trisnonylphenyl phosphite
Trilauryl phosphite
Tris (2,4-di-t-butylphenyl) phosphite
Di-Isooctylphosphite
Triisodecyl phosphite
Diisodecylphenylphosphite
Diphenyl isodecyl phosphite
Triphenyl phosphite
tris(tridecyl)phosphite
Diphenyl isooctyl phosphite
12H-Dibenzo[d,g][1,3,2]dioxaphosphocin, 2,4,8,10-tetrakis(1,1-dimethylethyl)-6-(octyloxy)-
2,2'-Ethylidenebis (4,6-di-t-butylphenyl) fluorophosphonite
Di-sodium-hydrogen-phosphite
Phosphorous acid, bis[2,4-bis(1,1-dimethylethyl)-6-methylphenyl]ethyl ester
2,4,6 Tri-t-butylphenyl-2-butyl-2-ethyl-1,3-propane-diol-phosphite
Triisooctyl phosphite
Tris (dipropyleneglycol) phosphite
Diisooctyl octylphenyl phosphite
Tris-(2,4-di-tert.butyl-5-methylphenyl)-phosphite
(phenylethyl)phenylphosphites
Diphenylphosphite
Phenylneopentyleneglycolphosphite
Phosphorous acid, trioctadecyl ester
Phosphorous acid, dinonylphenyl bis(nonylphenyl) ester
Phosphorous acid, 2-ethylhexyl diphenyl ester
9,10-Dihydro-9-oxa-10-phosphaphenanthren-10-oxide
Diphenyl Tridecyl Phosphite
Phosphonic acid, dioctyl ester
Phosphorous acid, 2-ethylhexyl diphenyl ester
Bis(octadecyloxy)-2,4,8,10-tetraoxa-3,9-diphosphaspiro[5.5]undecane
Tetrakis-(2,4-di-tert-butyl-phenyl)-4,4'-bi-phenylene-di-phosphonite
Bis (2,4-di-t-butylphenyl) pentaerythritol diphosphite
Bis-(2,6-di-tbutyl-4-methyl-phenyl)-pentaerythritol-di-phosphite
2,4,8,10-Tetraoxa-3,9-diphosphaspiro[5.5]undecane,3,9-bis[2,4,6-tris(1,1-dimethylethyl)phenoxy]-
Poly 4,4' isopropylidenediphenol C₁₂₋₁₅ Alcohol phosphite
Tetrakis isodecyl 4,4'-isopropylidene diphosphite
Bis-(2,4-dicumylphenyl)-pentaerytritol-diphosphite
Phosphorous acid, (1-methylethylidene)di-4,1-phenylene-tetraoctadecyl ester
Phosphorous acid, oxybis (methyl-2,1 ethane diyl) tetraphenyl ester
Diisodecyl pentaerythritol diphosphite
2,4,8,10-Tetraoxa-3,9-diphosphaspiro[5.5]undecane, 3,9-bis[2-(1,1-dimethylethyl)-4-(1-methyl-1-phenylethyl)phenoxy]-Tetra(tridecyl)-4,4'-butylidene-bis(6-t-butyl-2-methyldiphenol)diphosphite
Phosphonous acid, [1,1'-biphenyl]-3,3'-diylbis-, tetrakis[2,4-bis(1,1-dimethylethyl)-5-methylphenyl] ester
Poly(dipropyleneglycol)phenylphosphite
2,4,8,10-Tetraoxa-3,9-diphosphaspiro[5.5]undecane,3,9-bis(nonylphenoxy)-
2-[[2,4,8,10-Tetrakis(1,1-dimethylethyl)dibenzo[d,f][1,3,2]dioxaphosphepin-6-yl]oxy]-N,N-bis[2[[2,4,8,10-tetrakis(1,1-dimethylethyl)dibenzo[d,f][1,3,2]dioxaphosphepin-6-yl]oxy-ethyl]ethanamine
3,6,8,11,14,16,19,22,24,27-Decaoxa-7,15,23-triphosphanonacosane-1,29-diol
Phosphorous acid, P,P',P"-[(1-methyl-1-propanyl-3-ylidene)tris[2-(1,1-dimethylethyl)-5-methyl-4,1-phenylene]] P,P,P',P',P",P"-hexatridecyl ester
Trilauryl trithiophosphite
Prefered are:
Trisnonylphenyl phosphite
Trilauryl phosphite
Triisodecyl phosphite
Diisodecylphenylphosphite
Diphenyl isodecyl phosphite
tris(tridecyl)phosphite
Diphenyl isooctyl phosphite
Phosphorous acid, bis[2,4-bis(1,1-dimethylethyl)-6-methylphenyl]ethyl ester
Triisooctyl phosphite
Bis(octadecyloxy)-2,4,8,10-tetraoxa-3,9-diphosphaspiro[5.5]undecane
Bis (2,4-di-t-butylphenyl) pentaerythritol diphosphite
Bis-(2,6-di-tbutyl-4-methyl-phenyl)-pentaerythritol-di-phosphite
2,4,8,10-Tetraoxa-3,9-diphosphaspiro[5.5]undecane,3,9-bis[2,4,6-tris(1,1-dimethylethyl)phenoxy]-
Poly 4,4' isopropylidenediphenol C₁₂₋₁₅ Alcohol phosphite
Tetrakis isodecyl 4,4'-isopropylidene diphosphite
Bis-(2,4-dicumylphenyl)-pentaerytritol-diphosphite
2,4,8,10-Tetraoxa-3,9-diphosphaspiro[5.5]undecane, 3,9-bis[2-(1,1-dimethylethyl)-4-(1-methyl-1-phenylethyl)phenoxy]-
Tetra(tridecyl)-4,4'-butylidene-bis(6-t-butyl-2-methyldiphenol)diphosphite Poly(dipropyleneglycol)phenylphosphite
2,4,8,10-Tetraoxa-3,9-diphosphaspiro[5.5]undecane,3,9-bis(nonylphenoxy)-
2-[[2,4,8,10-Tetrakis(1,1-dimethylethyl)dibenzo[d,f][1,3,2]dioxaphosphepin-6-yl]oxy]-
N,N-bis[2[[2,4,8,10-tetrakis(1,1-dimethylethyl)dibenzo[d,f][1,3,2]dioxaphosphepin-6-yl]oxy-ethyl]ethanamine
Most prefered are:
Bis(octadecyloxy)-2,4,8,10-tetraoxa-3,9-diphosphaspiro[5.5]undecane
Bis (2,4-di-t-butylphenyl) pentaerythritol diphosphite
Bis-(2,6-di-tbutyl-4-methyl-phenyl)-pentaerythritol-di-phosphite
Bis-(2,4-dicumylphenyl)-pentaerytritol-diphosphite
2,4,8,10-Tetraoxa-3,9-diphosphaspiro[5.5]undecane,3,9-bis(nonylphenoxy)-
2-[[2,4,8,10-Tetrakis(1,1-dimethylethyl)dibenzo[d,f][1,3,2]dioxaphosphepin-6-yl]oxy]-
N,N-bis[2[[2,4,8,10-tetrakis(1,1-dimethylethyl)dibenzo[d,f][1,3,2]dioxaphosphepin-6-yl]oxy-ethyl]ethanamine
Examples of thio-ether containing compounds for use as thermal stabilizers are:
Dilauryl thiodipropionate
Dimyristyl thiodipropionate
Distearyl thiodipropionate
Ditridecyl thiodipropionate
3,3-Thiodipropionic acid used as monomer in the polymerization
Lauryl-stearylthiodiprionate
Disulfide, dioctadecyl
Cyclohexane, 1-(octadecylthio)-3-[2-(octadecylthio)ethyl]-Propanoic acid, 3-(dodecylthio)-, 1,1'-[oxybis(2,1-ethanediyloxy-2,1-ethanediyl)] ester
Pentaerythrityl tetrakis (β-laurylthiopropionate)
Bis[2-methyl-4-{3-n-alkyl(C₁₂ or C₁₄) thiopropionyloxy}-5-t-butylphenyl]sulphide
Propanoic acid, 3,3'-thiobis-, 1,1'-dimethyl ester, polymer with 1,4cyclohexanedimethanol, octadecyl ester
Prefered are:
Dilauryl thiodipropionate
Distearyl thiodipropionate
Ditridecyl thiodipropionate
Disulfide, dioctadecyl
Pentaerythrityl tetrakis (β-laurylthiopropionate)
Propanoic acid, 3,3'-thiobis-, 1,1'-dimethyl ester, polymer with 1,4cyclohexanedimethanol, octadecyl ester
Most prefered are:
Dilauryl thiodipropionate
Distearyl thiodipropionate
Pentaerythrityl tetrakis (β-laurylthiopropionate)
Propanoic acid, 3,3'-thiobis-, 1,1'-dimethyl ester, polymer with
1,4cyclohexanedimethanol, octadecyl ester

The amount of secondary anti-oxidant in the composition according to the invention may be between 0.01 and 5 wt. %. The amount of secondary heat stabilizer in the composition according to the invention is preferably between 0.1 and 2.0 wt. %, more preferably between 0.2 and 1.5 wt. %, more preferably between 0.3 and 1.0 wt. %.

It is also possible that the composition according to the invention contains, next to the secondary anti-oxidant, a primary anti-oxidant. The amount of primary anti-oxidant may be between 0.01 and 2 wt. % of the composition according to the invention. The amount of primary anti-oxidnat in the composition according to the invention is preferably between 0.1 and 1.5 wt. %.

Primary anti-oxidants are radical scavangers such as for example phenolic anti-oxidants or aromatic amines.
Examples of phenolic anti-oxidants are:
Benzenepropanoic acid, 3,5-bis(1,1-dimethylethyl)-4-hydroxy-octadecyl ester
2-Propyleneacid, 2-isopentane 6[(3-isopentane-2-hydroxy-5-isopentane-phenyl)-ethyl]-4-isopentanephenylester
2-Propenoic acid, 2-(1,1-dimethylethyl)-6-[[3-1,1-dimethylethyl)-2-hydroxy-5-methylphenyl]methyl]-4-methylphenylester
Di-ethyl-ester of 3,5-di-t-butyl-4-hydroxy-benzyl-phosphoric acid
2,5,7,8-Tetra-methyl-2-(4',8',12'-tri-methyl-tri-decyl)-chroman-6-ol
Benzenepropanoic acid, 3,5-bis(1,1-dimethylethyl)-4-hydroxy-, isooctyl ester
Benzenepropionic acid, 3,5-bis (1,1-dimethylethyl)-4-hydroxy, isotridecyl ester
Benzenepropanoic acid, 3,5-bis(1,1-dimethylethyl)-4-hydroxy-C₁₃₋₁₅ branched and linear alkyl esters
2,2'-Methylenebis (6-t-butyl-4-methylphenol)
2,2'-Methylenebis (4-ethyl-6-t-butylphenol)
2,2'-Methylenebis 6-(1-methylcyclohexyl)-p-cresol
4,4'-Butylidenebis (6-t-butyl-3-methyl-phenol)
2,2'-Ethylidenebis (4,6-di-t-butylphenol)
Phenol, 4,4'-methylenebis[2,6-bis(1,1-dimethylethyl)-
2,2'-Isobutylidenebis (4,6-dimethylphenol)
N,N'-Hexamethylene bis (3,5-di-t-butyl-4-hydroxyhydrocinnamamide)
3,9-Bis(1,1-dimethyl-2-(β-(3-t-butyl-4-hydroxy-5-methyl-phenyl)-propyonyl-oxy)-ethyl)-2,4,8,10-tetraoxospiro
Ethylenebis (oxyethylene) bis (3-t-butyl-4-hydroxy-5-methylhydrocinnamate) Hexamethylenebis (3,5-di-t-butyl-4-hydroxycinnamate)
Benzenepropanamide, N,N'-1,3-propanediylbis[3,5-bis(1,1-dimethylethyl)-4-hydroxy-] Calcium bis[monoethyl(3,5-di-t-butyl-4-hydroxybenzyl)phosphonate]
Phenol, 2,2'-methylenebis[4-methyl-6-nonyl-]
1,1,3-Tris(2-methyl-4-hydroxy-5-t-butyl phenyl)butane
Phenol, 4,4'4"'-[(2,4,6-trimethyl-1,3,5-benzenetriyl)-tris-(methylene)]-tris-2,6-bis(1,1-dimethylethyl)-
Bis-[3,3-bis-(4'-hydroxy-3'-t-butylphenyl butanoic acid]-glycol ester Tris(3,5-di-t-butyl-4-hydroxy benzyl) isocyanurate
1,3,5-Tris (4-t-butyl-3-hydroxy-2,6-dimethylbenzyl)-1,3,5-triazine-2,4,6-(1H,3H,5H)-trione
3-(3,5-Di-t-butyl-4-hydroxy-phenyl) propion acid ester with 1,3,5-tris (2-hydroxy-ethyl)-iso-cyanurate
Tetrakis [methylene (3,5-di-t-butyl-4-hydroxyhydrocinnamate)] methane p-Cresol/dicyclopentadiene butylated reaction product
1,1,3-tris[2-methyl-4-[3-(3,5-di-tert-butyl-4-hydroxyphenyl)propionyloxy]-5-tert-butylphenyl]butane
Prefered are:
Benzenepropanoic acid, 3,5-bis(1,1-dimethylethyl)-4-hydroxy-octadecyl ester
2,5,7,8-Tetra-methyl-2-(4',8',12'-tri-methyl-tri-decyl)-chroman-6-ol
Benzenepropanoic acid, 3,5-bis(1,1-dimethylethyl)-4-hydroxy-, isooctyl ester
Benzenepropionic acid, 3,5-bis (1,1-dimethylethyl)-4-hydroxy, isotridecyl ester
Benzenepropanoic acid, 3,5-bis(1,1-dimethylethyl)-4-hydroxy-C₁₃₋₁₅ branched and linear alkyl esters
2,2'-Methylenebis (6-t-butyl-4-methylphenol)
N,N'-Hexamethylene bis (3,5-di-t-butyl-4-hydroxyhydrocinnamamide)
Ethylenebis (oxyethylene) bis (3-t-butyl-4-hydroxy-5-methylhydrocinnamate) Hexamethylenebis (3,5-di-t-butyl-4-hydroxycinnamate)
1,1,3-Tris(2-methyl-4-hydroxy-5-t-butyl phenyl)butane
Phenol, 4,4'4"'-[(2,4,6-trimethyl-1,3,5-benzenetriyl)-tris-(methylene)]-tris-2,6-bis(1,1-dimethylethyl)-
Bis-[3,3-bis-(4'-hydroxy-3'-t-butylphenyl butanoic acid]-glycol ester Tris(3,5-di-t-butyl-4-hydroxy benzyl) isocyanurate
1,3,5-Tris (4-t-butyl-3-hydroxy-2,6-dimethylbenzyl)-1,3,5-triazine-2,4,6-(1H,3H,5H)-trione
3-(3,5-Di-t-butyl-4-hydroxy-phenyl) propion acid ester with 1,3,5-tris (2-hydroxy-ethyl)-iso-cyanurate
Tetrakis [methylene (3,5-di-t-butyl-4-hydroxyhydrocinnamate)] methane
Most prefered are:
Benzenepropanoic acid, 3,5-bis(1,1-dimethylethyl)-4-hydroxy-octadecyl ester
2,5,7,8-Tetra-methyl-2-(4',8',12'-tri-methyl-tri-decyl)-chroman-6-ol
N,N'-Hexamethylene bis (3,5-di-t-butyl-4-hydroxyhydrocinnamamide)
Ethylenebis (oxyethylene) bis (3-t-butyl-4-hydroxy-5-methylhydrocinnamate)
Hexamethylenebis (3,5-di-t-butyl-4-hydroxycinnamate)
Phenol, 4,4'4"'-[(2,4,6-trimethyl-1,3,5-benzenetriyl)-tris-(methylene)]-tris-2,6-bis(1,1-dimethylethyl)-
Bis-[3,3-bis-(4'-hydroxy-3'-t-butylphenyl butanoic acid]-glycol ester
Tris(3,5-di-t-butyl-4-hydroxy benzyl) isocyanurate
1,3,5-Tris (4-t-butyl-3-hydroxy-2,6-dimethylbenzyl)-1,3,5-triazine-2,4,6-(1H,3H,5H)-trione
Tetrakis [methylene (3,5-di-t-butyl-4-hydroxyhydrocinnamate)] methane 3-(3,5-Di-t-butyl-4-hydroxy-phenyl) propion acid ester with 1,3,5-tris (2-hydroxy-ethyl)-iso-cyanurate
Examples of Aromatic Amines are:
4,4'-Di-cumyl-di-phenyl-amine
N,N'-Diphenyl-p-phenylenediamine
2,2,4-Trimethyl-1,2-dihydroquinoline polymer
4,4'-Dioctyl-diphenyl-amine
1,4-Benzenediamine, N,N'-bis(1-methylpropyl)
N-Isopropyl-N'-phenyl-paraphenylenediamine
N-1,3-dimethyl-butyl-N'-phenyl-paraphenylene-diamine
N,N'-Bis (1,4-dimethylpentyl)-p-phenylenediamine
2-Naphthalenamine, N-phenyl-
1,4-Benzenediamine, N-(1-methylethyl)-N'-phenyl-
Benzenamine, N-phenyl-,reaction product with 2,4,4 trimethyl pentane
1,4-Benzenediamine, N,N'-bis[4-(1-phenylethyl)phenyl]-
p-(p-Toluene-sulfonylamido)-diphenylamine
Benzeneamine, N-{4-[(1,3-dimethylbutyl)imino]-2,5-cyclohexadien-1-ylidine
N-phenyl-N'-1-phenylethyl-1,4-phenylenediamine
reaction product of diphenyl amine and acetone
Mixture of styrenated diphenylamines
Phenyl-α-naphtylamine
Nonylated diphenylamine
A blend of reaction products of:
N-(1,3-dimethylbutyl)-N'-phenyl-p-phenylenediamine and N-(4-[α,α'dimethylbenzyl]phenyl)-N'-(1,3-dimethylbutyl) p-phenylendiamine
Blend of alkyl-aryl-p-phenylenediamines
Blend of alkyl-aryl- and dialkyl-p-phenylenediamines
1,2-Dihydro-2,2,4-trimethylquinolene
1,4-benzenediamine-N-(α-methylbenzyl)-N'-phenyl
Prefered are:
4,4'-Di-cumyl-di-phenyl-amine
N,N'-Diphenyl-p-phenylenediamine
2,2,4-Trimethyl-1,2-dihydroquinoline polymer
4,4'-Dioctyl-diphenyl-amine
1,4-Benzenediamine, N,N'-bis(1-methylpropyl)
N-Isopropyl-N'-phenyl-paraphenylenediamine
N-1,3-dimethyl-butyl-N'-phenyl-paraphenylene-diamine
N,N'-Bis (1,4-dimethylpentyl)-p-phenylenediamine
Benzenamine, N-phenyl-,reaction product with 2,4,4 trimethyl pentane
Most prefered is:
4,4'-Di-cumyl-di-phenyl-amine
Examples of stabilizers acting both as primary and as secondary stabilizers are
4,4'-Thio-bis-(2-t-butyl-5-methyl-phenol)
2,4-Bis-octyl-mercapto-6-(4-hydroxy-3,5-di-t-butyl-anilo)-1,3,5-triazine
2,2'-Thio-ethanol-bis-3-(3,5-di-t-butyl-4-hydroxy-phenyl)-propionate
Phenol, 2,2'-Thiobis[6-(1,1-dimethylethyl)-4-methyl-]
Phenol, 4,4'-thiobis[2-(1,1-dimethylethyl)-6-methyl]-
Phenol,2-methyl-4,6-bis[(octylthio)methyl]-
4,6-bis-(dodecylthiomethyl)-O-cresol
6-[3-(3-t-Butyl-4-hydroxy-5-methyl)propoxy]-2,4,8,10- tetra-t-butyldibenz[d,f][1,3,2]-dioxaphosphepin
Phenol, 4,4'-thiobis 2-(1,1-dimethylethyl) phosphite
Tris-(2-t-butyl-4-thio-(2'-methyl-4'-hydroxy-5'-t-butyl)phenyl-5-methyl]phenyl phosphite
Prefered are:
4,4'-Thio-bis-(2-t-butyl-5-methyl-phenol)
2,4-Bis-octyl-mercapto-6-(4-hydroxy-3,5-di-t-butyl-anilo)-1,3,5-triazine
2,2'-Thio-ethanol-bis-3-(3,5-di-t-butyl-4-hydroxy-phenyl)-propionate
Phenol,2-methyl-4,6-bis[(octylthio)methyl]-4,6-bis-(dodecylthiomethyl)-O-cresol
6-[3-(3-t-Butyl-4-hydroxy-5-methyl)propoxy]-2,4,8,10-tetra-t-butyldibenz[d,f][1,3,2]-dioxaphosphepin
Phenol, 4,4'-thiobis 2-(1,1-dimethylethyl) phosphite
Tris-(2-t-butyl-4-thio-(2'-methyl-4'-hydroxy-5'-t-butyl)phenyl-5-methyl]phenyl phosphite
Most prefered are:
2,4-Bis-octyl-mercapto-6-(4-hydroxy-3,5-di-t-butyl-anilo)-1,3,5-triazine
2,2'-Thio-ethanol-bis-3-(3,5-di-t-butyl-4-hydroxy-phenyl)-propionate
Phenol,2-methyl-4,6-bis[(octylthio)methyl]-Tris-(2-t-butyl-4-thio-(2'-methyl-4'-hydroxy-5'-t-butyl)phenyl-5-methyl]phenyl phosphite
The invention will further be explained by the examples.

### Preparation of test samples.

### Materials

Irganox 1330 from BASF, phenol, 4,4'4"'-[(2,4,6-trimethyl-1,3,5-benzenetriyl)-tris-(methylene)]-tris-2,6-bis(1,1- dimethylethyl)-, a primary anti-oxidant.
Irganox PS 802 from BASF, distearyl thiopropionate, a secondary anti-oxidant. Irgafos 126 from BASF, Bis (2,4-di-t-butylphenyl) pentaerythritol diphosphite, a secondary anti-oxidant.
Polymer 1: polymer containing 30 wt. % of residues of a dimerised fatty acid having 36 C-atoms, the balance being hard segments of 1,4-butylene diol and terphthalic acid.
Polymer 2: polymer containing 15wt. % of residues of a dimerised fatty acid having 36 C-atoms, the balance being hard segments of 1,4-butylene diol and terphthalic acid.
Polymer 3: a copolymer containing 30 wt. % of soft blocks of polyTHF, the balance being hard segments of 1,4-butylene diol and terphthalic acid.

### Compounding

Compounds were produced by feeding a dry blend consisting of one of the polymers and one or more of the thermal stabilizers to a 25 mm Werner and Pfleiderer™ twin screw extruder. The strand of the mixture leaving the extruder was cooled and cut into granulate having a diameter of about 6 mm.

### Thermal stability test

Granules were placed in a reactor, the reactor was filled with a 100 % oxygen atmosphere of 1 bar after which the reactor was closed. After that the temperature of the reactor was kept at 170°C for 25 hours. The pressure drop due to the reaction of the oxygen with the polymer granules was monitored. From the pressure drop the amount of oxygen that has reacted with the film was calculated. The amount of oxygen that has reacted with the granules is taken as a measure for the thermal stability of the polymer composition.
The results are shown in table I.

### Comparative experiment A

Is granulate of a composition consisting of polymer 1. The polymer was processed via the twin screw extruder as for the blends of the polymer and the stabilizers. The result of the thermal stability test are given in table 1.

### Comparative experiment B

Is granulate of a composition consisting of 99.5 wt. % of polymer 1 and 0.5 wt. % of Irganox 1330, a primary anti-oxidant. The result of the thermal stability test are given in table 1.

### Comparative experiment C

Is a granulate of a composition consisting of 99 wt. % of polymer 3, 0.5 wt % Irganox PS 802 and 0.5% Irganox 1330.

### Example I.

In examples 1 a composition is tested existing of 99.5 wt. % of polymer 1 and 0.5 wt. % of Irgafos 126, a secondary anti-oxidant. The result of the thermal stability test are given in table 1.

### Example II

In examples 2 a composition is tested existing of 99.5 wt. % of polymer 1 and 0.5 wt. % of Irganox PS 802, a secondary anti-oxidant. The result of the thermal stability test are given in table 1.

### Example III

In example 3 a composition is tested existing of 99 wt. % of polymer 1 and 0.5 wt. % Irgafos 126, a secondary anti-oxidant, and 0.5 % Irganox 1330, a primary anti-oxidant. The result of the thermal stability test are given in table 1.

### Example IV

In example 3 a composition is tested existing of 99 wt. % of polymer 1 and 0.5 wt. % Irgafos 126, a secondary anti-oxidant, and 0.5 % Irganox 1330, a primary anti-oxidant. The result of the thermal stability test are given in table 1.

### Example V

As example IV, however polymer 2 is used, comprising 15 wt. % of residues of a dimerised fatty acid, instead of 30 wt. %.

**Table I. Thermal stability of the polymer compositions at 170 °C.**

| Example/Comperative example | Stabilizer compostion | reacted oxygen (mmol/kg) |
|---|---|---|
| CE A | Unstabilized | >350 |
| CE B | 0.5% Irganox 1330 (primary anti-oxidant) | 291 |
| CE C | Polymer 3, 0.5% Irganox PS 802 + 0.5% Irganox 1330 (Prim + sec anti-oxidant) | >350 |
| | | |
| Ex I | 0.5% Irgafos 126 (secondary anti-oxidant) | 85 |
| Ex II | 0.5% Irganox PS 802 (secondary anti-oxidant) | 193 |
| | | |
| Ex III | 0.5% Irgafos 126 + 0.5 % Irganox 1330 (Prim + sec anti-oxidant) | 30 |
| Ex IV | 0.5% Irganox PS 802 + 0.5% Irganox 1330 (Prim + sec anti-oxidant) | 94 |
| Ex V | polymer 2, Irganox PS 802 + 0.5% Irganox 1330 (Prim + sec anti-oxidant) | 92 |

From the results in table 1 it is clear that the secondary anti-oxidants have a pronounced effect on the thermal stability of the polymer composition, also in combination with further stabilizers.

From the comparison of comparative experiment C and the examples it is clear that the composition according to the invention containing the polymer comprising the residue of a dimerised fatty acid and/or a derivative thereof shows a good thermal stability compared to a similar polymer containing a different soft block.

## Claims

1. Polymer composition containing a thermoplastic elastomer containing hard segments of a repeating units derived from at least one alkylene diol and at least one aromatic dicarboxylic acid and which thermoplastic elastomer contains residues of a dimerised fatty acid and/or a derivative thereof, **characterized in that** the composition contains a secondary antioxidant, which secondary anti-oxidant is a trivalent phosphorus containing anti-oxidant or a thio-ether containing anti-oxidant.

2. Polymer composition according to claim 1, wherein the at least one alkylene diol is butylene diol and the at least one aromatic dicarboxylic acid is terphthalic acid.

3. Polymer composition according to any one of the preceding claims, wherein the thermoplastic elastomer contains between 1 and 70 wt. % of residues of a dimerised fatty acid and/or a derivative thereof.

4. Polymer composition according to any one of the preceding claims, wherein the thermoplastic elastomer contains between 5 and 50 wt. % of residues of a dimerised fatty acid and/or a derivative thereof.

5. Polymer composition according to any one of the preceding claims, wherein the composition contains 0.01 - 5 wt. % of the secondary anti-oxidant.

6. Polymer composition according to any one of the preceding claims, wherein the composition contains 0.1 - 2 wt. % of the secondary anti-oxidant.

7. Polymer composition according to any one of the preceding claims, wherein the trivalent phosphorus containing anti-oxidant is at least one compound selected from the group consisting of
Bis(octadecyloxy)-2,4,8,10-tetraoxa-3,9-diphosphaspiro[5.5]undecane
Bis (2,4-di-t-butylphenyl) pentaerythritol diphosphite
Bis-(2,6-di-tbutyl-4-methyl-phenyl)-pentaerythritol-di-phosphite
Bis-(2,4-dicumylphenyl)-pentaerytritol-diphosphite
2,4,8,10-Tetraoxa-3,9-diphosphaspiro[5.5]undecane,3,9-bis(nonylphenoxy)-
2-[[2,4,8,10-Tetrakis(1,1-dimethylethyl)dibenzo[d,f][1,3,2]dioxaphosphepin-6-yl]oxy]-N,N-bis[2[[2,4,8,10-tetrakis(1,1-dimethylethyl)dibenzo[d,f][1,3,2]dioxaphosphepin-6-yl]oxy-ethyl]ethanamine

8. Polymer composition according to any one of claims 1 - 6, wherein the thio-ether containing anti-oxidant is at least one compound selected from the group consisting of
Dilauryl thiodipropionate
Distearyl thiodipropionate
Pentaerythrityl tetrakis (β-laurylthiopropionate)
Propanoic acid, 3,3'-thiobis-, 1,1'-dimethyl ester, polymer with 1,4cyclohexanedimethanol, octadecyl ester

9. Polymer composition according to any one of the preceding claims, wherein the composition contains, next to the secondary anti-oxidant, a primary anti-oxidant.

## Patentansprüche

1. Polymerzusammensetzung, enthaltend ein thermoplastisches Elastomer mit Hartsegmenten aus Wiederholungseinheiten, die sich von mindestens einem Alkylendiol und mindestens einer aromatischen Dicarbonsäure ableiten, wobei das thermoplastische Elastomer Reste einer dimerisierten Fettsäure und/oder eines Derivats davon enthält, **dadurch gekennzeichnet, dass** die Zusammensetzung ein sekundäres Antioxidans enthält, wobei es sich bei dem sekundären Antioxidans um ein dreiwertigen Phosphor enthaltendes Antioxidans oder ein thioetherhaltiges Antioxidans handelt.

2. Polymerzusammensetzung nach Anspruch 1, wobei es sich bei dem mindestens einen Alkylendiol um Butylendiol handelt und es sich bei der mindestens einen aromatischen Dicarbonsäure um Terephthalsäure handelt.

3. Polymerzusammensetzung nach einem der vorhergehenden Ansprüche, wobei das thermoplastische Elastomer zwischen 1 und 70 Gew.-% Reste einer dimerisierten Fettsäure und/oder eines Derivats davon enthält.

4. Polymerzusammensetzung nach einem der vorhergehenden Ansprüche, wobei das thermoplastische Elastomer zwischen 5 und 50 Gew.-% Reste einer dimerisierten Fettsäure und/oder eines Derivats davon enthält.

5. Polymerzusammensetzung nach einem der vorhergehenden Ansprüche, wobei die Zusammensetzung 0,01-5 Gew.-% des sekundären Antioxidans enthält.

6. Polymerzusammensetzung nach einem der vorhergehenden Ansprüche, wobei die Zusammensetzung 0,1-2 Gew.-% des sekundären Antioxidans enthält.

7. Polymerzusammensetzung nach einem der vorhergehenden Ansprüche, wobei es sich bei dem dreiwertigen Phosphor enthaltenden Antioxidans um mindestens eine Verbindung aus der Gruppe bestehend aus
Bis(octadecyloxy)-2,4,8,10-tetraoxa-3,9-diphosphaspiro[5.5]undecan
Bis(2,4-di-t-butylphenyl)pentaerythritoldiphosphit
Bis-(2,6-di-t-butyl-4-methylphenyl)penta-erythritoldiphosphit
Bis(2,4-dicumylphenyl)pentaerytritoldiphosphit
2,4,8,10-Tetraoxa-3,9-diphosphaspiro[5.5]undecan, 3,9-Bis(nonylphenoxy)-,
2-[[2,4,8,10-Tetrakis(1,1-dimethylethyl)dibenzo-[d,f][1,3,2]dioxaphosphepin-6-yl]oxy]-N,N-bis[2[[2,4,8,10-tetrakis(1,1-dimethylethyl)-dibenzo[d,f][1,3,2]dioxaphosphepin-6-yl]oxyethyl]-ethanamin
handelt.

8. Polymerzusammensetzung nach einem der Ansprüche 1-6, wobei es sich bei dem thioetherhaltigen Antioxidans um mindestens eine Verbindung aus der Gruppe bestehend aus
Dilaurylthiodipropionat
Distearylthiodipropionat
Pentaerythrityltetrakis(β-laurylthiopropionat) Propansäure, 3,3'-Thiobis-, 1,1'-Dimethylester, Polymer mit 1,4-Cyclohexandimethanol, Octadecylester
handelt.

9. Polymerzusammensetzung nach einem der vorhergehenden Ansprüche, wobei die Zusammensetzung neben dem sekundären Antioxidans ein primäres Antioxidans enthält.

## Revendications

1. Composition polymère contenant un élastomère thermoplastique contenant des segments rigides d'unités constitutives dérivées d'au moins un alkylène-diol et d'au moins un acide dicarboxylique aromatique, et ledit élastomère thermoplastique contenant des résidus d'un acide gras dimérisé et/ou d'un dérivé de celui-ci, **caractérisée en ce que** la composition contient un antioxydant secondaire, ledit antioxydant secondaire étant un antioxydant contenant du phosphore trivalent ou un antioxydant contenant un thioéther.

2. Composition polymère selon la revendication 1, dans laquelle le ou les alkylène-diols sont un butylène-diol et le ou les acides dicarboxyliques aromatiques sont l'acide téréphtalique.

3. Composition polymère selon l'une quelconque des revendications précédentes, dans laquelle l'élastomère thermoplastique contient entre 1 et 70 % en poids de résidus d'un acide gras dimérisé et/ou d'un dérivé de celui-ci.

4. Composition polymère selon l'une quelconque des revendications précédentes, dans laquelle l'élastomère thermoplastique contient entre 5 et 50 % en poids de résidus d'un acide gras dimérisé et/ou d'un dérivé de celui-ci.

5. Composition polymère selon l'une quelconque des revendications précédentes, la composition contenant 0,01 à 5 % en poids de l'antioxydant secondaire.

6. Composition polymère selon l'une quelconque des revendications précédentes, la composition contenant 0,1 à 2 % en poids de l'antioxydant secondaire.

7. Composition polymère selon l'une quelconque des revendications précédentes, dans laquelle l'antioxydant contenant du phosphore trivalent est au moins un composé sélectionné dans le groupe constitué de bis(octadécyloxy)-2,4,8,10-tétraoxa-3,9-diphosphaspiro[5.5]undécane bis(2,4-di-t-butylphényl)pentaérythritol-diphosphite
bis-(2,6-di-t-butyl-4-méthyl-phényl)-pentaérythritol-diphosphite bis-(2,4-dicumylphényl)-pentaérytritol-diphosphite 2,4,8,10-tétraoxa-3,9-diphosphaspiro[5.5]undécane,3,9-bis(nonylphénoxy)-2-[[2,4,8,10-tétrakis(1,1-diméthyléthyl)dibenzo[d,f][1,3,2]dioxaphosphépin-6-yl]oxy]-N,N-bis[2[[2,4,8,10-tétrakis(1,1-diméthyléthyl)dibenzo[d,f][1,3,2]dioxaphosphépin-6-yl]oxy-éthyl]éthanamine.

8. Composition polymère selon l'une quelconque des revendications 1 à 6, dans laquelle l'antioxydant contenant un thioéther est au moins un composé sélectionné dans le groupe constitué de dilauryl-thiodipropionate distéaryl-thiodipropionate
pentaérythrityl-tétrakis(β-laurylthiopropionate) acide propanoïque, 3,3'-thiobis-, 1,1'-diméthylester, polymère avec 1,4-cyclohexanediméthanol, octadécylester.

9. Composition polymère selon l'une quelconque des revendications précédentes, la composition contenant, en plus de l'antioxydant secondaire, un antioxydant primaire.
